# EUROPÄISCHE PATENTSCHRIFT

(11) **EP 3 348 699 B1**
(45) Veröffentlichungstag und Bekanntmachung des Hinweises auf die Patenterteilung: **07.08.2019**
(21) Anmeldenummer: 17208883.3
(22) Anmeldetag: 20.12.2017
(51) Int. Cl.: D06F 39/00, D06F 33/02, H04L 12/28

(54) **HAUSHALTSGERÄT MIT VERBESSERTER BEDIENUNG, VERFAHREN ZU SEINEM BETRIEB UND SYSTEM UMFASSEND DAS HAUSHALTSGERÄT**
HOUSEHOLD APPLIANCE WITH IMPROVED CONTROL, METHOD FOR OPERATING THE SAME, AND SYSTEM COMPRISING SAID HOUSEHOLD APPLIANCE
APPAREIL ÉLECTROMÉNAGER À COMMANDE AMÉLIORÉE, SON PROCÉDÉ DE FONCTIONNEMENT ET SYSTÈME COMPRENANT L'APPAREIL ÉLECTROMÉNAGER

(30) Priorität: 13.01.2017 DE 102017200512
(43) Veröffentlichungstag der Anmeldung: 18.07.2018
(73) Patentinhaber: BSH Hausgeräte GmbH, 81739 München (DE)
(72) Erfinder: Fuchs, Constanze, 10439 Berlin (DE); Gérard, Nina, 10439 Berlin (DE)

(56) Entgegenhaltungen:
- EP-A2- 2 441 871
- DE-A1-102015 201 948
- US-A1- 2013 231 758
- JACKY BOURGEOIS ET AL: "Conversations with my washing machine", PERVASIVE AND UBIQUITOUS COMPUTING, ACM, 2 PENN PLAZA, SUITE 701 NEW YORK NY 10121-0701 USA, 13. September 2014 (2014-09-13), Seiten 459-470, XP058054639, DOI: 10.1145/2632048.2632106 ISBN: 978-1-4503-2968-2

## Beschreibung

Die Erfindung betrifft ein Haushaltsgerät zur Behandlung von Wäschestücken mit einer Steuereinrichtung und mindestens einer Bedienvorrichtung umfassend eine Dateneinheit, wobei in der Dateneinheit eine Behandlungsprogrammdatenbank hinterlegt ist, und ein Bedienmittel, wobei die mindestens eine Bedienvorrichtung eingerichtet ist, drahtlos Daten mit der Steuereinrichtung auszutauschen. Die Erfindung betrifft außerdem ein Verfahren zum Betrieb eines solchen Haushaltsgeräts und ein System umfassend ein solches Haushaltsgerät.

Die technische Entwicklung von Haushaltsgeräten hat zu Verbesserungen in den Bereichen Umweltschonung, Energieverbrauch und Verfahrensoptimierung geführt. Neue Waschmaschinen sind beispielsweise hinsichtlich Wasser- und Waschmittelverbrauch wesentlich umweltfreundlicher als noch vor einigen Jahren. Technische Weiterentwicklungen von Bauteilen und Waschverfahren führten zudem zu einem wesentlich geringeren Energieverbrauch und zu einer stetig wachsenden Anzahl an Waschprogrammen, Optionen und Sonderprogrammen, die dem Benutzer zwar eine Vielfalt an Möglichkeiten bieten, Wäschestücke optimal zu pflegen und zu reinigen, die aber auch voraussetzen, dass sich ein Benutzer detailliert mit dem Programm- und Optionsportfolio seiner Waschmaschine auskennt.

Des weiteren ist eine effiziente Haushaltsplanung heutzutage unumgänglich. Nicht nur im Berufsleben wird das tägliche Leben schneller. Häufig reihen sich auch in privaten Lebensbereichen viele Termine aneinander. Die Haushaltsplanung, insbesondere aber die Wäschepflege spielt dabei eine wesentliche Rolle. Haushaltsgeräte bieten zwar bereits eine Vielfalt an Möglichkeiten in diesem Bereich, die rechtzeitige Planung und Durchführung liegt jedoch nach wie vor in der Hand des Benutzers. Dies birgt häufig das Problem, dass eine rechtzeitige Wäschepflege oft aufgrund zu knapper Planung nicht mehr möglich ist oder aufgrund beispielsweise von Zeitmangel ein falsches Behandlungsprogramm ausgewählt wird, welches letztlich zu Schäden an den Kleidungsstücken führen kann. Es wäre daher wünschenswert, ein Haushaltsgerät bereitstellen zu können, das es einem Benutzer ermöglicht, die vielfältigen Optionen des Haushaltsgeräts sicher ausnutzen und effizient in das alltägliche Leben integrieren zu können.

Die Veröffentlichung US 2013/231758 A1 offenbart ein Steuerungssystem für Haushaltsgeräte, insbesondere für Waschmaschinen, bei dem ein Benutzer den zeitlichen Ablauf z.B. eines Waschprogramms auf einer visuellen Oberfläche (z.B. auf einem Fernsehbildschirm) einstellen kann und außerdem den Zeitpunkt eines Ereignisses eingeben kann und die Zeitinformationen insgesamt dargestellt bekommt, wobei ihm der Beginn des Waschprogramms visuell auf der Zeitablauf-Informationsleiste dargestellt wird.

Die Veröffentlichung US 2013/0086520 A1 beschreibt eine Methode zum Sortieren von Gegenständen auf einem mobilen Gerät für eine anschließende Behandlung in einem Haushaltsgerät. Die Methode umfasst: Empfang einer Eingabe der zu behandelnden Gegenstände auf dem mobilen Gerät; Identifikation von mindestens einem Behandlungskriterium für jeden der eingegebenen Gegenstände; Gruppierung der eingegebenen Gegenstände entsprechend der Behandlungskriterien; und Darstellung von mindestens einer der Gruppierungen und einem ermittelten Betriebsablauf auf dem mobilen Gerät.

Die Veröffentlichung EP 2 441 871 A2 beschreibt eine Kontrollmethode einer Waschmaschine umfassend: Empfang von Zieldaten der Wäschestücke; Ermittlung eines Betriebsablaufs basierend auf den Zieldaten der Wäschestücke; und Kontrolle des Waschens der Wäschestücke entsprechend dem ermittelten Betriebsablauf, wobei die Kontrollmethode weiterhin die Vorhersage eines Materials der Wäschestücke, einer Art der Verschmutzung der Wäschestücke, und einen Grad an Verschmutzung der Wäschestücke basierend auf den Zieldaten der Wäschestücke umfasst.

Die Veröffentlichung US 2002/0078511 A1 beschreibt ein Wäschebehandlungsgerät mit einer zentralen Prozessoreinheit (CPU) zum Betrieb des Wäschebehandlungsgeräts in Verbindung mit einem aus einer Vielzahl von Wäscheprogrammen ausgewählten Programm, wobei jedes Wäscheprogramm mindestens eine Anweisung zum Betrieb des Wäschebehandlungsgeräts enthält, und eine Methode zur Kontrolle des Wäschebehandlungsgeräts: Bereitstellung einer Touch-Screen-Kontrollblende; Empfang einer ersten Programmeingabe durch einen Benutzer über die Kontrollblende des Geräts, wobei sich die erste Programmeingabe auf ein Programm, ausgewählt aus einer Vielzahl von Waschprogrammen, bezieht; Aufforderung zu einer zusätzlichen Eingabe über die Kontrollblende an den Benutzer; und Durchführen eines Waschbetriebs im Wäschebehandlungsgerät unter Verwendung der Anweisung zum Betrieb und jeder der ersten und zusätzlichen Programmeingaben. Die US 2002/0078511 A1 beschreibt weiterhin ein über ein Menü gesteuertes Kontrollsystem in einem Wäschebehandlungsgerät, umfassend: Eine Anzeigevorrichtung zur Darstellung einer stufenweisen Abfolge von Programmoptionen, wobei ausgewählte Programmoptionen anhand der Anzeigevorrichtung durch einen Benutzer angepasst werden können; und eine Kontrolleinrichtung zur Erstellung eines Waschbetriebs basierend auf den ausgewählten Programmoptionen.

Die Veröffentlichung DE 42 02 656 A1 beschreibt eine Waschmaschine mit einer elektronischen Programmsteuereinrichtung mit mehreren abgespeicherten Programmen für Wäscheposten unterschiedlicher Art, wobei jedem Programm auf bestimmte Randbedingungen bezogene Waschparameterwerte zugeordnet sind und ein auf den jeweiligen Wäscheposten abgestimmtes Programm durch einen Programmwähler anwählbar ist, wobei mit Beginn oder während des Ablaufs des gewählten Programms mindestens eine Messung bzw. Erfassung und Auswertung der Randbedingungen vorgenommen wird und die gewonnenen Messdaten als Steuergrößen für die weitere Steuerung des gewählten Programms herangezogen werden.

Die Veröffentlichung US 8,713,975 B2 beschreibt ein Wäschebehandlungsgerät zur Behandlung von Wäschestücken, die in eine Kammer eingebracht werden, entsprechend wenigstens einem Betriebsablauf aus einer Vielzahl von Betriebsabläufen, die eine Vielzahl von Betriebsparametern aufweisen. Das Wäschebehandlungsgerät umfasst eine Vielzahl von kontrollierbaren Bauteilen, die funktionsbereit sind, den Betriebsablauf umzusetzen; ein Benutzerinterface, umfassend einen Betriebsablauf-Selektor, um einen Betriebsablauf aus der Vielzahl der Betriebsabläufe auszuwählen; und einen Leistungsziel-Selektor, umfassend ein Bilddisplay, auf welchem eine Landkarte der Leistungsziele dargestellt ist, welche in mehrere Zielbereiche unterteilt ist, wobei jeder Zielbereich ein unterschiedliches Leistungsziel für wenigstens einen Betriebsablauf aus der Vielzahl der Betriebsabläufe repräsentiert; und einen durch einen Benutzer kontrollierbaren Gewichtungs-Selektor, der einen fixierten Gewichtungsbereich aufweist, welcher bezüglich der Leistungsziellandkarte verschiebbar ist; und ein Kontrollsystem, das operativ mit dem Benutzerinterface gekoppelt ist, umfassend ein Gewichtungsmodul, das operativ mit dem Benutzerinterface gekoppelt ist und ein Set von ausführbaren Instruktionen zur Ermittlung einer Zielgewichtung umfasst, basierend auf einem relativen Anteil von mindestens einem der Zielbereiche innerhalb des Gewichtungsbereichs; und einen Kontroller, der konfiguriert ist, einen Wert für mindestens einen aus der Vielzahl der Betriebsparameter festzulegen, basierend auf der ermittelten Zielgewichtung, und mindestens eines aus der Vielzahl der Bauteile zur Umsetzung des Betriebsablaufs zu kontrollieren, basierend auf dem festgelegten Wert für den mindestens einen aus der Vielzahl der Betriebsparameter; wobei der Benutzer die Leistungsziele des Betriebsablaufs durch ein Verschieben des Gewichtungs-Selektors bezüglich der Landkarte der Leistungsziele kontrollieren kann, um die Zielgewichtung durch ein Ändern der relativen Anteile der Zielbereiche im Gewichtungsbereich zu verändern.

Die Veröffentlichung DE 10 2013 200 374 A1 beschreibt ein Haushaltsgerät mit einer Fernsteuerung zur Steuerung zumindest einer Funktion des Haushaltsgerätes und einer Anzeige, wobei die Anzeige ausschließlich in der Fernsteuerung angeordnet ist und wobei das Haushaltsgerät eine Kommunikationsschnittstelle zum drahtlosen Kommunizieren mit der Fernsteuerung umfasst und wobei die Fernsteuerung einen nicht-flüchtigen Speicher zum Speichern von Daten für das Haushaltsgerät umfasst und einen Prozessor zum Ausführen von Bedienprogrammen.

Die Veröffentlichung DE 10 2012 101 537 A1 beschreibt ein Haushaltsgerät mit einem Gehäuse, einer Blende und einer Steuereinrichtung zum Betreiben des Haushaltsgerätes, das in einem Speicher zumindest ein Programm zum Betreiben des Gerätes umfasst, mit einer Kommunikationseinrichtung mit Mitteln zur Datenübertragung und zur Bereitstellung einer Wirkverbindung mit einem mobilen Gerät mit einer Bedien- und Anzeigeeinrichtung, wobei das Haushaltsgerät dazu eingerichtet ist, das Programm und/oder die Parametrierung zur Ausführung in der Steuereinrichtung von dem mobilen Gerät zu empfangen und von diesem zu aktivieren.

Die Veröffentlichung DE 198 55 503 A1 beschreibt eine Wäschebehandlungsmaschine mit einer elektronischen Steuereinrichtung zur automatischen Durchführung von Wäschebehandlungsprogrammen, wobei ein Entscheidungsfindungsmittel vorgesehen ist zum maschinellen Identifizieren der Art von Wäschestücken und zur maschinellen Entscheidungsbildung darüber, mit welchem Wäschebehandlungsprogramm die identifizierten Wäschestücke behandelbar sind, dass Informations-Ausgabemittel vorgesehen sind, durch welche das von dem Entscheidungsfindungsmittel maschinell ermittelte Wäschebehandlungsprogramm einer Person als Vorschlag präsentierbar ist, und dass von einer Person betätigbare Eingabemittel zum Bestätigen des maschinell ermittelten Wäschebehandlungsprogramms vorgesehen sind.

Die Veröffentlichung DE 10 2008 036 943 A1 beschreibt eine Waschmaschine zur Reinigung oder Behandlung von Textilien mit Hilfe von der Waschmaschine zuführbarem Waschmittel, umfassend eine Steuereinheit, wobei der Waschmaschine eine Erfassungseinrichtung zugeordnet ist, welche Informationen über die der Waschmaschine zugeführten Textilien oder das der Waschmaschine zugeführte Waschmittel ermitteln und an die Steuereinheit übertragen kann, wobei die Steuereinheit aufgrund der übertragenen Informationen ein angemessenes Waschprogramm bestimmt.

Die Veröffentlichung DE 197 47 150 A1 beschreibt ein Verfahren zum Behandeln von textilen Produkten durch Haushaltsgeräte, wobei die textilen Produkte mit wenigstens einem maschinenlesbaren Transponder mit wenigstens einem elektronischen Schaltkreis versehen sind, der Informationen über das textile Produkt enthält, und wobei die Haushaltsgeräte mit wenigstens einer Vorrichtung zum Auslesen der Informationen über das textile Produkt ausgerüstet sind, mit den folgenden Schritten: Einlesen der Informationen aus dem wenigstens einen Transponder der zu behandelnden textilen Produkte mittels der wenigstens einen Auslesevorrichtung in ein Haushaltsgerät; und Bestimmung der weiteren Behandlung der textilen Produkte entsprechend der eingelesenen Informationen durch das Haushaltsgerät.

Die Veröffentlichung DE 10 2013 210 996 A1 beschreibt eine Analysevorrichtung zum Analysieren von Wäschestücken außerhalb eines Wäschebehandlungsgeräts, mindestens aufweisend mindestens eine Kamera und eine Auswerteeinrichtung zur Bestimmung mindestens einer wäschepflegerelevanten Eigenschaft mindestens eines Wäschestücks auf der Grundlage zumindest eines mittels der Kamera davon aufgenommenen Bilds.

Die Veröffentlichung DE 10 2011 087 274 A1 beschreibt ein Hausgerät für die Behandlung eines Behandlungsguts, wobei das Hausgerät eine Steuerung zur Ausführung aller erforderlichen Behandlungsschritte zur Erreichung eines bestimmungsgemäßen Behandlungserfolges in Bezug auf das Behandlungsgut aufweist, und wobei beim Einbringen des Behandlungsgutes in das Hausgerät über ein Eingabe-Steuerungsteil Informationen über das Behandlungsgut in die Steuerung des Hausgerätes einlesbar sind. Über das Eingabe-Steuerungsteil wird das Behandlungsgut als solches Gattungs- und Zustands-bezogen erkannt. Die Steuerung des Haushaltsgerätes weist insbesondere ein Basis-Steuerungsteil und einen rechnerartigen Ergänzungs-Steuerungsteil auf, mit der Maßgabe, dass die Steuerung mit deren Steuerungsteilen bewirkt, dass in Bezug auf das erkannte Behandlungsgut die erforderlichen Behandlungsschritte selbsttätig ausführbar sind. Das Eingabe-Steuerungsteil weist offenbar eine Kamera auf, welche eine für den Empfang eines breitbandigen Strahlenspektrums geeignete Sensorik aufweist.

Vor diesem Hintergrund war es Aufgabe der vorliegenden Erfindung, ein Haushaltsgerät zur Behandlung von Wäschestücken mit einer verbesserten Bedienbarkeit bereitzustellen. Das Haushaltsgerät soll es einem Benutzer dabei vorzugsweise ermöglichen, die Durchführung von Behandlungsprogrammen sicherer und effizienter in einen Haushaltsablauf zu integrieren.

Die Lösung dieser Aufgabe wird nach dieser Erfindung erreicht durch ein Haushaltsgerät, ein System umfassend das Haushaltsgerät, sowie ein Verfahren zum Betrieb des Haushaltsgeräts mit den Merkmalen der entsprechenden unabhängigen Patentansprüche. Bevorzugte Ausführungsformen des erfindungsgemäßen Haushaltsgeräts und des erfindungsgemäßen Systems, sowie des erfindungsgemäßen Verfahrens sind in den jeweiligen abhängigen Patentansprüchen aufgeführt. Bevorzugten Ausführungsformen des erfindungsgemäßen Haushaltsgeräts und des erfindungsgemäßen Systems entsprechen bevorzugte Ausführungsformen des erfindungsgemäßen Verfahrens und umgekehrt, auch wenn dies hierin nicht explizit festgestellt ist.

Gegenstand der Erfindung ist somit ein Haushaltsgerät zur Behandlung von Wäschestücken (im Folgenden auch nur als Haushaltsgerät bezeichnet) mit einer Steuereinrichtung und mindestens einer Bedienvorrichtung umfassend eine Dateneinheit und ein Bedienmittel, wobei die mindestens eine Bedienvorrichtung eingerichtet ist, drahtlos Daten mit der Steuereinrichtung auszutauschen und wobei in der Dateneinheit eine Behandlungsprogrammdatenbank hinterlegt ist, wobei die mindestens eine Bedienvorrichtung ausgestaltet ist, eine Eingabe mindestens eines Benutzertermins BT1 zu ermöglichen, und wobei die mindestens eine Bedienvorrichtung ferner ausgestaltet ist, anhand einer Zuweisungsroutine einen Datenabgleich zwischen mindestens einem Benutzertermin BT1 und der Behandlungsprogrammdatenbank durchzuführen und mindestens ein Behandlungsprogramm B_{BT1} zu ermitteln und innerhalb einer vorgegebenen Zeitspanne Δt_{BT1} vor dem mindestens einen Benutzertermin BT1 eine Information an einen Benutzer auszugeben.

Erfindungsgemäß sind die Ausgestaltung und die Anordnung der mindestens einen Bedienvorrichtung nicht eingeschränkt. Es kann sich beispielsweise um eine externe Bedienvorrichtung handeln, die Bedienvorrichtung kann aber auch in das Haushaltsgerät integriert sein. Ein erfindungsgemäßes Haushaltsgerät kann überdies auch mehrere Bedienvorrichtungen aufweisen, die vorzugsweise auch unterschiedlich ausgestaltet und angeordnet sein können.

In einer bevorzugten Ausführungsform des erfindungsgemäßen Haushaltsgeräts ist die mindestens eine Bedienvorrichtung in das Haushaltsgerät integriert, das Bedienmittel umfasst eine Bedienblende mit einer Anzeigevorrichtung und ist für die Eingabe und die Ausgabe von Daten in bildhafter Darstellung und/oder Text und/oder akustisch ausgebildet, wobei die Bedienvorrichtung zusätzlich eingerichtet ist, drahtlos Daten mit einem externen Benutzerendgerät auszutauschen. Auf diese Weise können beispielsweise Benutzertermine BT entweder direkt von einem Benutzer über die Bedienblende eingegeben werden oder auch zusätzlich oder alternativ von einem externen Benutzerendgerät empfangen werden.

In einer weiteren bevorzugten Ausführungsform des erfindungsgemäßen Haushaltsgeräts ist die mindestens eine Bedienvorrichtung in ein externes Benutzerendgerät integriert und und das Bedienmittel umfasst ein Touch-Display und ist für die Eingabe und Ausgabe von Daten in bildhafter Darstellung und/oder als Text und/oder akustisch ausgebildet. Besonders bevorzugt ist die Dateneinheit dann eine App.

Jedenfalls ist in der Dateneinheit der mindestens einen Bedienvorrichtung erfindungsgemäß eine Behandlungsprogrammdatenbank hinterlegt.

Der Begriff Behandlungsprogramm ist dabei breit auszulegen. Ein Behandlungsprogramm im Sinne der Erfindung kann ein in einem Haushaltsgerät werkseitig implementiertes Behandlungsprogramm sein, eine oder mehrere Zusatzoptionen oder auch ein benutzerdefiniertes Behandlungsprogramm. Je nach Art und Ausgestaltung des Haushaltsgeräts werden unterschiedlich viele Behandlungsprogramme in der Behandlungsprogrammdatenbank hinterlegt sein. So wird beispielsweise ein hochpreisiges Gerät mehr Behandlungsprogramme aufweisen, als ein preisgünstiges. Jedenfalls sind in der Behandlungsprogrammdatenbank Behandlungsprogramme hinterlegt, welche mit dem jeweiligen Haushaltsgerät unter Verwendung der Steuereinrichtung durchgeführt werden können.

Im erfindungsgemäßen Haushaltsgerät ist die mindestens eine Bedienvorrichtung ausgestaltet, anhand einer Zuweisungsroutine einen Datenabgleich zwischen mindestens einem Benutzertermin BT1 und der Behandlungsprogrammdatenbank durchzuführen.

Auch der Begriff Benutzertermin BT ist hierin breit auszulegen. Ein Benutzertermin BT ist im Allgemeinen die zeitliche und gegenständliche Kennzeichnung eines Ereignisses im Leben eines Benutzers. Dabei kann ein Benutzertermin BT beispielsweise ein einmaliges Ereignis sein oder auch ein regelmäßig stattfindendes Ereignis. Beispiele für Benutzertermine wären also ein regelmäßiger Sporttermin oder ein einmalig stattfindendes Business-Meeting.

Ein Benutzertermin BT im Sinne der Erfindung umfasst mindestens eine Terminkennzeichnung K_{BT} und ein Datum D_{BT}. Die Terminkennzeichnung K_{BT} dient dabei der gegenständlichen Kennzeichnung des Benutzertermins, also beispielsweise ob es sich um einen Sporttermin, einen Businesslunch oder ähnliches handelt. Das Datum D_{BT} dient der zeitlichen Kennzeichnung, also beispielsweise, an welchem Tag ein betreffendes Ereignis stattfindet, das Datum kann zusätzlich auch eine Uhrzeit enthalten.

Jedenfalls ist erfindungsgemäß die mindestens eine Bedienvorrichtung ausgestaltet, anhand einer Zuweisungsroutine einen Datenabgleich zwischen mindestens einem Benutzertermin BT1 und der Behandlungsprogrammdatenbank durchzuführen und mindestens ein Behandlungsprogramm B_{BT1} zu ermitteln. Dabei ist jedoch erfindungsgemäß die Anzahl der Benutzertermine BT, für welche ein Datenabgleich durchgeführt wird, nicht eingeschränkt. Dies kann auch für zwei oder mehr Benutzertermine BT erfolgen, dies ist abhängig von dem jeweiligen Benutzer.

Die Eingabe eines Benutzertermins BT kann anhand standardisierter Terminkennzeichnungen K_{BT} einem Benutzer durch die Bedienvorrichtung vorgegeben werden, vorzugsweise ist die Eingabe eines Benutzertermins BT jedoch individuell.

Die Art und Weise der Eingabe eines Benutzertermins BT ist erfindungsgemäß jedenfalls nicht eingeschränkt. Die Eingabe kann beispielsweise in Form eines Schlagworts erfolgen, aber auch in Wortzusammenhängen bis hin zu kompletten Sätzen. Die Eingabe kann dabei in Form von Text erfolgen und/oder akustisch, beispielsweise über eine Spracheingabe. Die Eingabe kann aber auch in Form von Bild erfolgen, beispielsweise über ein entsprechend gestaltetes Symbol, wie eine Hemd mit Krawatte für Business oder ein Tennisschläger mit Ball für Sport.

Vorzugsweise ist in der Dateneinheit, abhängig von der gegebenen Möglichkeit der Eingabe eines Benutzertermins BT, eine Wortdatenbank und/oder eine Bilddatenbank in der Dateneinheit hinterlegt und/oder eine Spracherkennung.

In einer bevorzugten Ausführungsform ist in der Dateneinheit zusätzlich eine Schlagwortdatenbank hinterlegt und die mindestens eine Bedienvorrichtung ist ausgestaltet, anhand der Zuweisungsroutine einen Datenabgleich über eine Schlagwortsuche durchzuführen. Besonders bevorzugt ist dann die Behandlungsprogrammdatenbank mit der Schlagwortdatenbank verknüpft, so dass beispielsweise einzelne Behandlungsprogramme entsprechenden Schlagworten zugeordnet sind.

Vorzugsweise können auch die in der Behandlungsprogrammdatenbank enthaltenen Behandlungsprogramme in Gruppen eingeteilt sein. Besonders bevorzugt ist dann jede dieser Gruppen entweder mit einem oder mehreren Schlagworten und/oder einem oder mehreren Bildern oder Symbolen verknüpft.

Ist das erfindungsgemäße Haushaltsgerät eine Waschmaschine, so kann auf diese Weise beispielsweise die Zuweisungsroutine bei Eingabe des Wortes Badminton, eine Zuordnung zu einem oder mehreren Behandlungsprogrammen vornehmen, mit welchem Sportkleidung gewaschen werden kann.

Jedenfalls ist die mindestens eine Bedienvorrichtung erfindungsgemäß ausgestaltet, innerhalb einer vorgegebenen Zeitspanne Δt_{BT1} vor dem mindestens einen Benutzertermin BT1 eine Information an einen Benutzer auszugeben.

Vorzugsweise ist hierzu in der Dateneinheit zusätzlich eine Gesamtdauer für die Durchführung jedes der Behandlungsprogramme hinterlegt. Besonders bevorzugt kann überdies ein Benutzer in der Dateneinheit hinterlegen, welche Haushaltsgeräte zur Behandlung von Wäschestücken in dem jeweiligen Haushalt vorhanden sind. Auf diese Weise kann die vorgegebene Zeitspanne Δt_{BT1} vor dem mindestens einen Benutzertermin BT1 zusätzlich daraufhin ausgerichtet werden, ob Kleidungsstücke an einem Wäscheständer getrocknet werden oder beispielsweise in einem Waschtrockner behandelt werden oder ob ein Trockner zur Verfügung steht.

Jedenfalls ist aber besonders bevorzugt die Zeitspanne Δt_{BT1} so gewählt, dass das mindestens eine ermittelte Behandlungsprogramm B_{BT1} vor dem Benutzertermin BT1 zumindest vollständig durchgeführt werden kann.

Vorzugsweise kann aber auch die Zeitspanne Δt_{BT1} durch einen Benutzer vorgegeben werden, beispielsweise immer 2 Tage vor einem Benutzertermin BT.

Vorzugsweise kann das Bedienmittel nach Ausgabe der Information einem Benutzer gestatten, das ermittelte mindestens eine Behandlungsprogramm B_{BT1} anzunehmen oder innerhalb vorgegebener Grenzen zu ändern, woraufhin das gegebenenfalls geänderte Behandlungsprogramm B_{BT1} an die Steuereinrichtung des Haushaltsgeräts zur Durchführung übermittelt werden kann.

In einer weiteren bevorzugten Ausführungsform des erfindungsgemäßen Haushaltsgeräts gestattet das Bedienmittel einem Benutzer mindestens einmalig eine Zeitspanne Δt_{delay} < Δt_{BT1} für eine wiederholte Ausgabe der Information einzugeben. Besonders bevorzugt kann die Ausgabe der Information an einen Benutzer auch mehrmals wiederholt werden. Auf diese Weise kann ein Benutzer mindestens einmal an die Durchführung des mindestens einen in Bezug auf den mindestens einen Benutzertermin BT1 ermittelten Behandlungsprogramm B_{BT1} erinnert werden.

Vorzugsweise ist dann in der Dateneinheit ebenfalls hinterlegt, an einen Benutzer eine Information darüber auszugeben, wenn eine Zeitspanne Δt_{BT1} - Δt_{delay} nicht mehr ausreicht, um das mindestens eine ermittelte Behandlungsprogramm B_{BT1} vollständig durchzuführen.

In einer bevorzugten Ausführungsform des erfindungsgemäßen Haushaltsgeräts ist die Bedienvorrichtung zusätzlich ausgestaltet, für den Fall, dass die Dauer des ermittelten Behandlungsprogramms B_{BT1} länger ist, als die Zeitspanne Δt_{BT1}, ein entsprechend verkürztes Behandlungsprogramm B_{BT1, Express} zu ermitteln und eine Information an den Benutzer auszugeben.

Vorteilhaft ist hierzu in der Dateneinheit zusätzlich für jedes in der Behandlungsprogrammdatenbank hinterlegtes Behandlungsprogramm ein entsprechendes Express-Behandlungsprogramm mit einer verkürzten Gesamtdauer hinterlegt. Besonders vorteilhaft ist in der Zuweisungsroutine ein Zusammenhang zwischen Behandlungsprogrammparametern und der Gesamtdauer eines Behandlungsprogramms hinterlegt, so dass auf diese Weise durch geeignete Variation von Behandlungsprogrammparametern die Gesamtdauer eines Behandlungsprogramms individuell verkürzt werden kann bei gleichzeitig optimalem Behandlungsergebnis. Auf diese Weise kann den vorliegenden Bedürfnissen eines Benutzers optimal Rechnung getragen werden.

In einer weiteren bevorzugten Ausführungsform des erfindungsgemäßen Haushaltsgeräts weist das Haushaltsgerät zusätzlich mindestens einen Sensor zur Detektion von Wäscheeigenschaften auf.

Der Begriff Wäscheeigenschaften ist hierin breit auszulegen. Wäscheeigenschaften können sowohl das Material von Wäschestücken umfassen, wie beispielsweise Baumwolle oder Seide. Wäscheeigenschaften können aber auch Art und Grad von Verschmutzungen umfassen, wie beispielsweise Fett- oder Eiweiß-haltige Flecken und deren Stärke. Wäscheeigenschaften können aber auch beispielsweise eine Menge an Behandlungsmittelresten sein, welche auf Kleidungsstücken etwa vor und/oder nach der Durchführung eines Waschprogramms vorhanden sein können. Jedenfalls können bevorzugt mit dem mindestens einen Sensor Wäscheeigenschaften detektiert werden.

Die Ausgestaltung und Anbringung des mindestens einen Sensors im Haushaltsgerät ist erfindungsgemäß nicht eingeschränkt und hängt von der Ausgestaltung des Sensors ab und von den zu detektierenden Wäscheeigenschaften.

In einer besonders bevorzugten Ausführungsform des erfindungsgemäßen Haushaltsgeräts ist der mindestens eine Sensor ein spektroskopischer Sensor.

Vorzugsweise ist der spektroskopische Sensor insbesondere ein Sensor, der im NIR-Bereich arbeitet. Ist das erfindungsgemäße Haushaltsgerät eine Waschmaschine oder ein Waschtrockner können nämlich insbesondere dann sowohl das Material von zu behandelnden Wäschestücken, als auch die Art und der Grad einer anhaftenden Verschmutzung bereits vor der Durchführung eines Behandlungsprogramms ermittelt werden. Auf diese Weise kann beispielsweise ein Behandlungsprogramm noch genauer an die vorliegenden Bedürfnisse eines Benutzers angepasst werden, insbesondere auch bei Verkürzung der Gesamtdauer eines Behandlungsprogramms oder bei Durchführung eines Express-Programms. So kann dann nämlich trotzdem ein optimales Behandlungsergebnis ermöglicht werden.

Erfindungsgemäß ist das Haushaltsgerät zur Behandlung von Wäschestücken nicht eingeschränkt. In einer bevorzugten Ausführungsform ist das Haushaltsgerät jedoch eine Waschmaschine oder ein Waschtrockner.

Ein erfindungsgemäßes Haushaltsgerät kann überdies auch eine Schnittstelle zur drahtlosen Datenübertragung aufweisen mittels welcher es in ein Haushaltsgerätenetzwerk integriert sein kann.

Gegenstand der Erfindung ist weiterhin ein System umfassend ein externes Benutzerendgerät und ein Haushaltsgerät, wobei das Haushaltsgerät ein Haushaltsgerät zur Behandlung von Wäschestücken ist mit einer Steuereinrichtung und mindestens einer Bedienvorrichtung umfassend eine Dateneinheit und ein Bedienmittel, wobei die mindestens eine Bedienvorrichtung in das externe Benutzerendgerät integriert ist und eingerichtet ist, drahtlos Daten mit der Steuereinrichtung auszutauschen und wobei in der Dateneinheit eine Behandlungsprogrammdatenbank hinterlegt ist, wobei die mindestens eine Bedienvorrichtung ausgestaltet ist, eine Eingabe mindestens eines Benutzertermins BT1 zu ermöglichen, und wobei die mindestens eine Bedienvorrichtung ferner ausgestaltet ist, anhand einer Zuweisungsroutine einen Datenabgleich zwischen mindestens einem Benutzertermin BT1 und der Behandlungsprogrammdatenbank durchzuführen und mindestens ein Behandlungsprogramm B_{BT1} zu ermitteln und innerhalb einer vorgegebenen Zeitspanne Δt_{BT1} vor dem mindestens einen Benutzertermin BT1 eine Information an einen Benutzer auszugeben.

In einer bevorzugten Ausführungsform des erfindungsgemäßen Systems ist das externe Benutzerendgerät ausgewählt aus der Gruppe bestehend aus einem Smartphone, einem TabletPC und einem Wearable. Besonders bevorzugt ist das externe Benutzerendgerät ein Smartphone. Auf diese Weise wird einem Benutzer ermöglicht, die Durchführung von Behandlungsprogrammen optimal in seinen Tagesablauf zu integrieren, da er auch außer Haus Informationen erhalten kann und Daten mit der Steuereinrichtung des Haushaltsgeräts ausgetauscht werden können.

Vorzugsweise umfasst das Haushaltsgerät zusätzlich auch eine in das Haushaltsgerät integrierte Bedienvorrichtung. Dann können auch bei Beschädigung oder Ausfall des externen Benutzerendgeräts noch Informationen an einen Benutzer ausgegeben werden und Daten mit der Steuereinrichtung ausgetauscht werden.

Gegenstand der Erfindung ist außerdem ein Verfahren zum Betrieb eines Haushaltsgeräts zur Behandlung von Wäschestücken mit einer Steuereinrichtung und mindestens einer Bedienvorrichtung umfassend eine Dateneinheit und ein Bedienmittel, wobei die mindestens eine Bedienvorrichtung eingerichtet ist, drahtlos Daten mit der Steuereinrichtung auszutauschen und wobei in der Dateneinheit eine Behandlungsprogrammdatenbank hinterlegt ist, wobei die mindestens eine Bedienvorrichtung ausgestaltet ist, eine Eingabe mindestens eines Benutzertermins BT1 zu ermöglichen, und wobei die mindestens eine Bedienvorrichtung ferner ausgestaltet ist, anhand einer Zuweisungsroutine einen Datenabgleich zwischen mindestens einem Benutzertermin BT1 und der Behandlungsprogrammdatenbank durchzuführen und mindestens ein Behandlungsprogramm B_{BT1} zu ermitteln und innerhalb einer vorgegebenen Zeitspanne Δt_{BT1} vor dem mindestens einen Benutzertermin BT1 eine Information an einen Benutzer auszugeben, wobei das Verfahren die folgenden Schritte umfasst:
a) Eingeben mindestens eines Benutzertermins BT1 in die Bedienvorrichtung, wobei der mindestens eine Benutzertermin BT1 eine Terminkennzeichnung K_{BT1} und ein Datum D_{BT1} umfasst;
b) die Dateneinheit mittels der Zuweisungsroutine mindestens in Bezug auf die Terminkennzeichnung K_{BT1} einen Datenabgleich mit der Behandlungsprogrammdatenbank durchführt und mindestens ein Behandlungsprogramm B_{BT1} ermittelt;
c) die Bedienvorrichtung entsprechend dem in Schritt (b) ermittelten mindestens einen Behandlungsprogramm B_{BT1} und dem in Schritt a) eingegebenen mindestens einen Benutzertermin BT1 innerhalb einer in Bezug auf das Datum D_{BT1} vorgegebenen Zeitspanne Δt_{BT1} eine Information an einen Benutzer ausgibt,
und wobei die Schritte a) bis c) einmal oder mehrmals durchgeführt werden.

Erfindungsgemäß ist es nicht eingeschränkt, in welchem Umfang und in welcher Form die Information in Schritt c) an einen Benutzer ausgegeben wird. Bei der ausgegebenen Information kann es sich beispielsweise nur um die Bezeichnung des in Schritt b) ermittelten mindestens einen Behandlungsprogramms B_{BT1} handeln, es können aber auch zusätzlich einer oder mehrere Behandlungsparameter des Behandlungsprogramms B_{BT1}, wie beispielsweise eine Temperatur bei einem Waschprogramm, mit ausgegeben werden.

Vorzugsweise wird jedoch die Information in Schritt c) des erfindungsgemäßen Verfahrens mit inhaltlichem und/oder direktem Bezug auf die entsprechende Terminkennzeichnung K_{BT1} des mindestens einen Benutzertermins BT1 ausgegeben. Ist das Haushaltsgerät beispielsweise eine Waschmaschine und das in Schritt b) ermittelte mindestens eine Behandlungsprogramm B_{BT1} ist ein Handwäscheprogramm und die Terminkennzeichnung K_{BT1} des mindestens einen Benutzertermins BT1 lautet Business-Meeting, so kann die Information in Schritt c) beispielsweise mit inhaltlichem Bezug als "Hemden waschen" oder entsprechend "Blusen waschen" ausgegeben werden. Die Information kann aber auch mit direktem Bezug ausgegeben werden, beispielsweise als "Business-Meeting Handwäscheprogramm durchführen".

Erfindungsgemäß wird in Schritt c) des erfindungsgemäßen Verfahrens die Information innerhalb einer in Bezug auf das Datum D_{BT1} vorgegebenen Zeitspanne Δt_{BT1} an einen Benutzer ausgegeben. Dabei ist nicht eingeschränkt, ob die vorgegebene Zeitspanne Δt_{BT1} ein in der Dateneinheit festgelegter Wert ist, beispielsweise immer 2 Tage vor dem Datum D_{BT1} des Benutzertermins BT1, oder ob die vorgegebene Zeitspanne Δt_{BT1} in Abhängigkeit beispielsweise des mindestens einen ermittelten Behandlungsprogramms B_{BT1} vorgegeben ist.

Vorzugsweise ist jedoch in der Dateneinheit der mindestens einen Bedienvorrichtung ein Zusammenhang zwischen der Gesamtdauer eines Behandlungsprogramms und der Zeitspanne Δt_{BT1} in Bezug auf das Datum D_{BT1} hinterlegt. Auf diese Weise kann berücksichtigt werden, dass Behandlungsprogramme in der Regel unterschiedliche Laufzeiten aufweisen. Besonders vorteilhaft ist dann in der Dateneinheit der mindestens einen Bedienvorrichtung auch hinterlegt, welche Wäschebehandlungsgeräte in einem Benutzerhaushalt vorhanden sind. Ist beispielsweise eine Waschmaschine und ein Trockner in einem Benutzerhaushalt vorhanden, so kann berücksichtigt werden, dass Kleidungsstücke einem Benutzer nach einer Trocknungsbehandlung schneller zur Verfügung stehen werden, als Kleidungsstücke, die auf einem Wäscheständer getrocknet werden. Die vorgegebene Zeitspanne Δt_{BT1} in Bezug auf das Datum D_{BT1} kann dann entsprechend kürzer gewählt sein.

Vorzugsweise kann aber auch ein Benutzer einen Wert für die Zeitspanne Δt_{BT1} vorgeben. Auf diese Weise wird es dem Benutzer ermöglicht, je nach Präferenz früher oder später die in Schritt c) ausgegebene Information in Bezug auf das Datum D_{BT1} des Benutzertermins BT1 zu erhalten.

In einer bevorzugten Ausführungsform des erfindungsgemäßen Verfahrens für den Fall, dass die Dauer des in Schritt b) ermittelten mindestens einen Behandlungsprogramms B_{BT1} länger ist, als die Zeitspanne Δt_{BT1}, ermittelt die Dateneinheit ein verkürztes Behandlungsprogramm B_{BT1, Express} und gibt in Schritt c) eine Information an einen Benutzer aus.

Für den Fall, dass kein verkürztes Behandlungsprogramm B_{BT1, Express} ermittelt werden kann, kann vorzugsweise auch die Nichtdurchführbarkeit eines Behandlungsprogramms an einen Benutzer als Information ausgegeben werden.

In einer weiteren bevorzugten Ausführungsform des erfindungsgemäßen Verfahrens umfasst das Verfahren zusätzlich den Schritt:
d) die Bedienvorrichtung an den Benutzer die Möglichkeit ausgibt, dass die in Schritt c) ausgegebene Information nach Ablauf einer durch den Benutzer wählbaren Zeitspanne Δt_{delay} nochmals ausgegeben wird, wobei gilt Δt_{delay} < Δt_{BT1}. Auf diese Weise kann besonders vorteilhaft eine Erinnerungsfunktion realisiert werden.

Vorzugsweise ermittelt darüber hinaus die Dateneinheit mittels der Zuweisungsroutine automatisch ein verkürztes Behandlungsprogramm B_{BT1, Express} oder die Nichtdurchführbarkeit eines Behandlungsprogramms, für den Fall, dass aufgrund der durch den Benutzer gewählten Zeitspanne Δt_{delay} die in Bezug auf das Datum des Benutzertermins D_{BT1} zur Verfügung stehende Zeitspanne für die Durchführung des mindestens einen ermittelten Behandlungsprogramms B_{BT1} zu kurz werden sollte.

Erfindungsgemäß ist es nicht eingeschränkt, wie das Eingeben des mindestens einen Benutzertermins BT1 in Schritt a) des erfindungsgemäßen Verfahrens erfolgt.

In einer bevorzugten Ausführungsform des erfindungsgemäßen Verfahrens ist die mindestens eine Bedienvorrichtung in ein externes Benutzerendgerät integriert und in Schritt a) erfolgt das Eingeben des mindestens einen Benutzertermins BT1 durch Importieren aus einem elektronischen Benutzerterminkalender.

Erfindungsgemäß führt in Schritt b) die Dateneinheit mittels der Zuweisungsroutine mindestens in Bezug auf die Terminkennzeichnung K_{BT1} einen Datenabgleich mit der Behandlungsprogrammdatenbank durch und ermittelt mindestens ein Behandlungsprogramm B_{BT1}.

In einer weiteren bevorzugten Ausführungsform des erfindungsgemäßen Verfahrens ist in der Dateneinheit zusätzlich eine Schlagwortdatenbank hinterlegt, welche mindestens eine Terminkennzeichnung K_{BT1} mit mindestens einem Behandlungsprogramm verknüpft und der Datenabgleich in Schritt b) erfolgt über eine Schlagwortsuche.

Die Erfindung hat zahlreiche Vorteile. Durch die Korrelation von Benutzerterminen und Behandlungsprogrammen ermöglicht das erfindungsgemäße Haushaltsgerät einem Benutzer, Wäschepflege im Alltag effizienter zu integrieren unter optimaler Ausnutzung des gesamten Portfolios des Haushaltsgeräts. Die Kenntnis und Planung von Programmlaufzeiten und die Auswahl von geeigneten Behandlungsprogrammen durch einen Benutzer ist nicht mehr nötig. Auf diese Weise können zeitliche Engpässe bei der Wäschepflege im Vorfeld eines festgelegten Termins oder auch Fehlbehandlungen durch die Auswahl falscher Behandlungsprogramme, beispielsweise aufgrund von Zeitmangel, vermieden werden. In Ausführungsformen kann der Benutzer überdies eine individualisierte Erinnerungsfunktion wahrnehmen, die es ermöglicht, das Alltagsleben noch effizienter zu gestalten, da auf diese Weise die Wäschepflege noch besser in den täglichen Ablauf integriert werden kann.

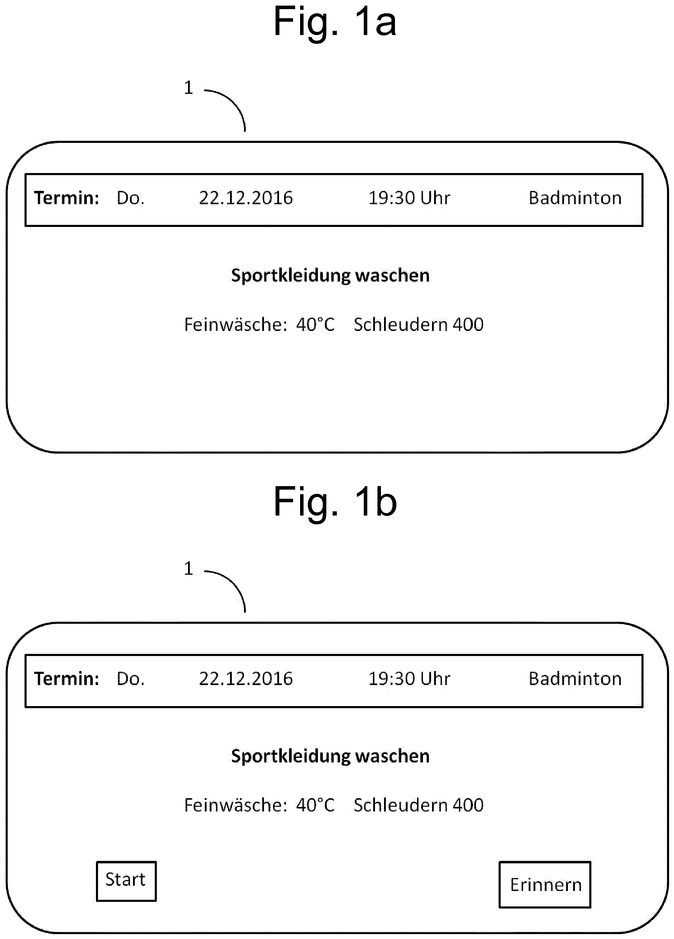

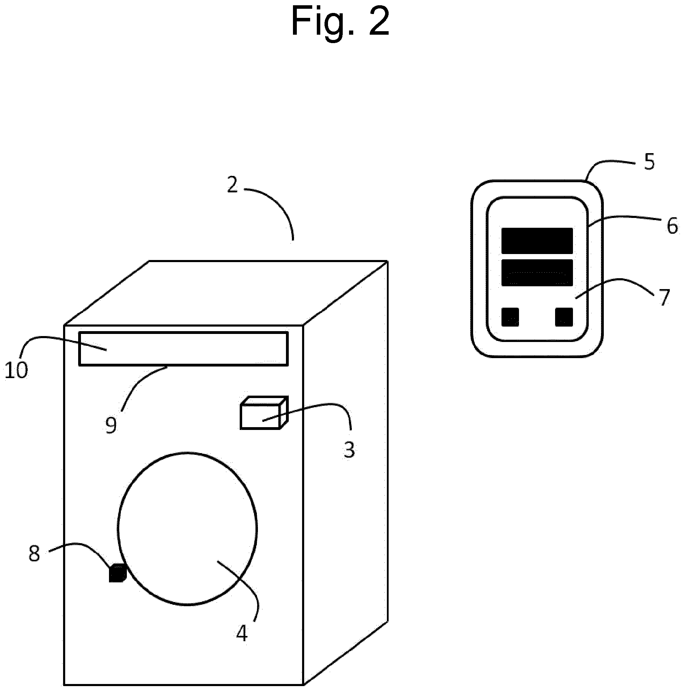

Weitere Einzelheiten der Erfindung ergeben sich aus der nachfolgenden Beschreibung nicht einschränkender Ausführungsformen. Hierbei wird Bezug genommen auf die Figuren 1a, 1b und 2.

Figuren 1a und 1b zeigen eine nicht einschränkende Ausgestaltung eines Bedienmittels als Touch Display.

Figur 2 zeigt in eine nicht einschränkende Ausführungsform eines erfindungsgemäßen Haushaltsgeräts.

Figur 1a zeigt eine nicht einschränkende Ausgestaltung eines Bedienmittels 1 in Form eines Touch Displays für eine Waschmaschine. Figur 1 zeigt weiterhin in nicht einschränkender Form die in Schritt c) des erfindungsgemäßen Verfahrens stattfindende Informationsausgabe an einen Benutzer. Im oberen Bereich des Touch Displays ist der Benutzertermin BT1 dargestellt, hier mit der Terminkennzeichnung K_{BT1} = Badminton und dem Datum D_{BT1} = Do. 22.12.2016 19:30Uhr. Das in Schritt b) des erfindungsgemäßen Verfahrens mindestens eine ermittelte Behandlungsprogramm B_{BT1} ist darunter dargestellt. In dieser nicht einschränkenden Ausführungsform erfolgt der Datenabgleich in Schritt b) über eine Schlagwortsuche. Das mindestens eine ermittelte Behandlungsprogramm BT1 ist entsprechend der Terminkennzeichnung Badminton ein Waschprogramm für Sportkleidung. Die Informationsausgabe erfolgt in dieser nicht einschränkenden Ausführungsform mit inhaltlichem Bezug zu der Terminkennzeichnung K_{BT1} = Badminton in der Form "Sportkleidung waschen", wobei zusätzlich zwei Behandlungsprogrammparameter, 40°C und Schleudern 400 zur Orientierung für den Benutzer mit angegeben sind.

Figur 1b zeigt eine nicht einschränkende Ausgestaltung des Bedienmittels 1 aus Figur 1a. In dieser Ausführungsform gestattet das Bedienmittel 1 dem Benutzer zusätzlich, das ermittelte Behandlungsprogramm für Sportkleidung über die Option "Start" zur Durchführung an die Steuereinrichtung der Waschmaschine zu übermitteln oder über die Option "Erinnern" sich die dargestellte Information nach einer vorgegebenen Zeitspanne erneut anzeigen zu lassen.

Figur 2 zeigt in einer nicht einschränkenden Ausführungsform ein erfindungsgemäßes Haushaltsgerät 2. Das Haushaltsgerät 2 ist hier als Waschmaschine 2 ausgestaltet. Die Waschmaschine 2 weist eine integrierte Bedienvorrichtung 9 auf. Die Bedienvorrichtung 9 weist ein Bedienmittel 10 auf, welches eine Bedienblende mit einer Anzeigevorrichtung umfasst. Die Bedienblende und die Anzeigevorrichtung ermöglichen die Eingabe mindestens eines Benutzertermins BT1 durch einen Benutzer in Schritt a) des erfindungsgemäßen Verfahrens und die Ausgabe von Information in Schritt c) des erfindungsgemäßen Verfahrens.

Die Waschmaschine 2 weist weiterhin eine zweite Bedienvorrichtung 7 auf, welche in ein externes Benutzerendgerät 5 integriert ist. Das externe Benutzerendgerät 5 ist in dieser nicht einschränkenden Ausführungsform ein Smartphone. Die zweite Bedienvorrichtung 7 weist überdies ein Bedienmittel 6 auf, welches als Touch Display ausgebildet ist. Auch das zweite Bedienmittel 6 ermöglicht die Eingabe mindestens eines Benutzertermins BT1 durch einen Benutzer in Schritt a) des erfindungsgemäßen Verfahrens und die Ausgabe von Information in Schritt c) des erfindungsgemäßen Verfahrens.

Des weiteren sind beide Bedienvorrichtungen 7,9 eingerichtet, drahtlos mit der Steuereinrichtung 3 der Waschmaschine 2 zu kommunizieren, so dass die Waschmaschine 2 entweder direkt am Gerät, aber auch in Entfernung des Geräts und sogar außer Haus gesteuert werden kann. In dieser nicht einschränkenden Ausführungsform weist die Waschmaschine 2 zudem einen spektroskopischen Sensor 8 auf, welcher in unmittelbarer Nähe der Trommel 4 angeordnet ist.

### Bezugszeichen

- 1: Bedienmittel, Touch Display
- 2: Haushaltsgerät zur Behandlung von Wäsche, Waschmaschine
- 3: Steuereinrichtung
- 4: Trommel zur Aufnahme von Wäschestücken
- 5: Externes Benutzerendgerät, Smartphone
- 6: Bedienmittel, Touch Display
- 7: Bedienvorrichtung integriert in das externe Benutzerendgerät
- 8: Sensor zur Detektion von Wäscheeigenschaften, spektroskopischer Sensor
- 9: Bedienvorrichtung integriert in das Haushaltsgerät
- 10: Bedienmittel, Bedienblende mit Anzeigevorrichtung

## Patentansprüche

1. Haushaltsgerät zur Behandlung von Wäschestücken (2) mit einer Steuereinrichtung (3) und mindestens einer Bedienvorrichtung (7,9) umfassend eine Dateneinheit und ein Bedienmittel (1,6,10), wobei die mindestens eine Bedienvorrichtung (7,9) eingerichtet ist, drahtlos Daten mit der Steuereinrichtung (3) auszutauschen und wobei in der Dateneinheit eine Behandlungsprogrammdatenbank hinterlegt ist, **dadurch gekennzeichnet, dass** die mindestens eine Bedienvorrichtung (7,9) ausgestaltet ist, eine Eingabe mindestens eines Benutzertermins BT1 zu ermöglichen, und wobei die mindestens eine Bedienvorrichtung (7,9) ferner ausgestaltet ist, anhand einer Zuweisungsroutine einen Datenabgleich zwischen mindestens einem Benutzertermin BT1 und der Behandlungsprogrammdatenbank durchzuführen und mindestens ein Behandlungsprogramm B_{BT1} zu ermitteln und innerhalb einer vorgegebenen Zeitspanne Δt_{BT1} vor dem mindestens einen Benutzertermin BT1 eine Information an einen Benutzer auszugeben.

2. Haushaltsgerät (2) nach Anspruch 1, **dadurch gekennzeichnet, dass** die Bedienvorrichtung (7,9) zusätzlich ausgestaltet ist, für den Fall, dass die Dauer des mindestens einen ermittelten Behandlungsprogramms B_{BT1} länger ist, als die Zeitspanne Δt_{BT1}, ein entsprechend verkürztes Behandlungsprogramm B_{BT1, Express} zu ermitteln und eine Information an den Benutzer auszugeben.

3. Haushaltsgerät (2) nach Anspruch 1 oder 2, **dadurch gekennzeichnet, dass** das Bedienmittel (1,6,10) einem Benutzer gestattet, mindestens einmalig eine Zeitspanne Δt_{delay} < Δt_{BT1} für eine wiederholte Ausgabe der Information einzugeben.

4. Haushaltsgerät (2) nach einem der Ansprüche 1 bis 3, **dadurch gekennzeichnet, dass** das Haushaltsgerät zur Behandlung von Wäschestücken (2) eine Waschmaschine (2) oder ein Waschtrockner ist.

5. Haushaltsgerät (2) nach einem der Ansprüche 1 bis 4, **dadurch gekennzeichnet, dass** das Haushaltsgerät (2) zusätzlich mindestens einen Sensor (8) zur Detektion von Wäscheeigenschaften aufweist.

6. Haushaltsgerät (2) nach Anspruch 5, **dadurch gekennzeichnet, dass** der mindestens eine Sensor (8) ein spektroskopischer Sensor (8) ist.

7. Haushaltsgerät (2) nach einem der Ansprüche 1 bis 6, **dadurch gekennzeichnet, dass** die mindestens eine Bedienvorrichtung (8) in das Haushaltsgerät (2) integriert ist, das Bedienmittel (1,6,10) eine Bedienblende mit einer Anzeigevorrichtung (10) umfasst und für die Eingabe und die Ausgabe von Daten in bildhafter Darstellung und/oder Text und/oder akustisch ausgebildet ist, wobei die Bedienvorrichtung (7,9) zusätzlich eingerichtet ist, drahtlos Daten mit einem externen Benutzerendgerät (5) auszutauschen.

8. Haushaltsgerät (2) nach einem der Ansprüche 1 bis 7, **dadurch gekennzeichnet, dass** die mindestens eine Bedienvorrichtung (7,9) in ein externes Benutzerendgerät (5) integriert ist und das Bedienmittel (1,6,10) ein Touch-Display (1,6) umfasst und für die Eingabe und Ausgabe von Daten in bildhafter Darstellung und/oder als Text und/oder akustisch ausgebildet ist.

9. System umfassend ein externes Benutzerendgerät (5) und ein Haushaltsgerät (2), wobei das Haushaltsgerät (2) ein Haushaltsgerät zur Behandlung von Wäschestücken (2) ist mit einer Steuereinrichtung (3) und mindestens einer Bedienvorrichtung (7,9) umfassend eine Dateneinheit und ein Bedienmittel (1,6,10), wobei die mindestens eine Bedienvorrichtung (7,9) in das externe Benutzerendgerät (5) integriert ist und eingerichtet ist, drahtlos Daten mit der Steuereinrichtung (3) auszutauschen und wobei in der Dateneinheit eine Behandlungsprogrammdatenbank hinterlegt ist, **dadurch gekennzeichnet, dass** die mindestens eine Bedienvorrichtung (7,9) ausgestaltet ist, eine Eingabe mindestens eines Benutzertermins BT1 zu ermöglichen, und wobei die mindestens eine Bedienvorrichtung (7,9) ferner ausgestaltet ist, anhand einer Zuweisungsroutine einen Datenabgleich zwischen mindestens einem Benutzertermin BT1 und der Behandlungsprogrammdatenbank durchzuführen und mindestens ein Behandlungsprogramm B_{BT1} zu ermitteln und innerhalb einer vorgegebenen Zeitspanne Δt_{BT1} vor dem mindestens einen Benutzertermin BT1 eine Information an einen Benutzer auszugeben.

10. System nach Anspruch 9, **dadurch gekennzeichnet, dass** das externe Benutzerendgerät (5) ausgewählt ist aus der Gruppe bestehend aus einem Smartphone (5), einem TabletPC und einem Wearable.

11. Verfahren zum Betrieb eines Haushaltsgeräts zur Behandlung von Wäschestücken (2) mit einer Steuereinrichtung (3) und mindestens einer Bedienvorrichtung (7,9) umfassend eine Dateneinheit und ein Bedienmittel (1,6,10), wobei die mindestens eine Bedienvorrichtung (7,9) eingerichtet ist, drahtlos Daten mit der Steuereinrichtung (3) auszutauschen und wobei in der Dateneinheit eine Behandlungsprogrammdatenbank hinterlegt ist, wobei die mindestens eine Bedienvorrichtung (7,9) ausgestaltet ist, eine Eingabe mindestens eines Benutzertermins BT1 zu ermöglichen, und wobei die mindestens eine Bedienvorrichtung (7,9) ferner ausgestaltet ist, anhand einer Zuweisungsroutine einen Datenabgleich zwischen mindestens einem Benutzertermin BT1 und der Behandlungsprogrammdatenbank durchzuführen und mindestens ein Behandlungsprogramm B_{BT1} zu ermitteln und innerhalb einer vorgegebenen Zeitspanne Δt_{BT1} vor dem mindestens einen Benutzertermin BT1 eine Information an einen Benutzer auszugeben, **dadurch gekennzeichnet, dass** es die folgenden Schritte umfasst:
a) Eingeben mindestens eines Benutzertermins BT1 in die Bedienvorrichtung (7,9), wobei der mindestens eine Benutzertermin BT1 eine Terminkennzeichnung K_{BT1} und ein Datum D_{BT1} umfasst;
b) die Dateneinheit mittels der Zuweisungsroutine mindestens in Bezug auf die Terminkennzeichnung K_{BT1} einen Datenabgleich mit der Behandlungsprogrammdatenbank durchführt und mindestens ein Behandlungsprogramm B_{BT1} ermittelt;
c) die Bedienvorrichtung (7,9) entsprechend dem in Schritt (b) ermittelten mindestens einen Behandlungsprogramm B_{BT1} und dem in Schritt a) eingegebenen mindestens einen Benutzertermin BT1 innerhalb einer in Bezug auf das Datum D_{BT1} vorgegebenen Zeitspanne Δt_{BT1} eine Information an einen Benutzer ausgibt,
und wobei die Schritte a) bis c) einmal oder mehrmals durchgeführt werden.

12. Verfahren nach Anspruch 11, **dadurch gekennzeichnet, dass** für den Fall, dass die Dauer des in Schritt b) ermittelten mindestens einen Behandlungsprogramms B_{BT1} länger ist, als die Zeitspanne Δt_{BT1}, die Dateneinheit ein verkürztes Behandlungsprogramm B_{BT1, Express} ermittelt und in Schritt c) eine Information an einen Benutzer ausgibt.

13. Verfahren nach einem der Ansprüche 11 oder 12, **dadurch gekennzeichnet, dass** das Verfahren zusätzlich den Schritt umfasst:
d) die Bedienvorrichtung (7,9) an den Benutzer die Möglichkeit ausgibt, dass die in Schritt c) ausgegebene Information nach Ablauf einer durch den Benutzer wählbaren Zeitspanne Δt_{delay} nochmals ausgegeben wird, wobei gilt Δt_{delay} < Δt_{BT1}.

14. Verfahren nach einem der Ansprüche 11 bis 13, **dadurch gekennzeichnet, dass** die mindestens eine Bedienvorrichtung in ein externes Benutzerendgerät integriert ist und in Schritt a) das Eingeben des mindestens einen Benutzertermins BT1 durch Importieren aus einem elektronischen Benutzerterminkalender erfolgt.

15. Verfahren nach einem der Ansprüche 11 bis 14, **dadurch gekennzeichnet, dass** in der Dateneinheit zusätzlich eine Schlagwortdatenbank hinterlegt ist, welche mindestens eine Terminkennzeichnung K_{BT1} mit mindestens einem Behandlungsprogramm verknüpft und der Datenabgleich in Schritt b) über eine Schlagwortsuche erfolgt.

## Claims

1. Household appliance for the treatment of laundry items (2), having a control facility (3) and at least one operating device (7,9) comprising a data unit and an operating means (1,6,10), wherein the at least one operating device (7,9) is configured to exchange data wirelessly with the control facility (3) and wherein a treatment program database is stored in the data unit, **characterised in that** the at least one operating device (7,9) is designed to allow an input of at least one user appointment BT1, and wherein the at least one operating device (7,9) is furthermore designed to perform a data reconciliation between at least one user appointment BT1 and the treatment program database on the basis of an assignment routine and to determine at least one treatment program B_{BT1} and to output an item of information to a user within a specified time period Δt_{BT1} before the at least one user appointment BT1.

2. Household appliance (2) according to claim 1, **characterised in that**, in the event that the duration of the at least one treatment program B_{BT1} determined is longer than the time period Δt_{BT1}, the operating device (7,9) is additionally designed to determine a correspondingly shortened treatment program B_{BT1, Express} and to output an item of information to the user.

3. Household appliance (2) according to claim 1 or 2, **characterised in that** the operating means (1,6,10) permits a user to input at least once a time period Δt_{delay} < Δt_{BT1} for a repeated output of the item of information.

4. Household appliance (2) according to one of claims 1 to 3, **characterised in that** the household appliance for the treatment of laundry items (2) is a washing machine (2) or a washer-dryer.

5. Household appliance (2) according to one of claims 1 to 4, **characterised in that** the household appliance (2) additionally has at least one sensor (8) for detecting the properties of laundry.

6. Household appliance (2) according to claim 5, **characterised in that** the at least one sensor (8) is a spectroscopic sensor (8).

7. Household appliance (2) according to one of claims 1 to 6, **characterised in that** the at least one operating device (8) is integrated into the household appliance (2), and the operating means (1,6,10) comprises a control panel with a display device (10) and is designed for the input and output of data in visual and/or text and/or acoustic form, wherein the operating device (7,9) is additionally configured to exchange data wirelessly with an external user terminal (5).

8. Household appliance (2) according to one of claims 1 to 7, **characterised in that** the at least one operating device (7,9) is integrated into an external user terminal (5) and the operating means (1,6,10) comprises a touch display (1,6) and is designed for the input and output of data in visual and/or text and/or acoustic form.

9. System comprising an external user terminal (5) and a household appliance (2), wherein the household appliance (2) is a household appliance for the treatment of laundry items (2), having a control facility (3) and at least one operating device (7,9) comprising a data unit and an operating means (1,6,10), wherein the at least one operating device (7,9) is integrated into the external user terminal (5) and is configured to exchange data wirelessly with the control facility (3) and wherein a treatment program database is stored in the data unit, **characterised in that** the at least one operating device (7,9) is designed to allow an input of at least one user appointment BT1, and wherein the at least one operating device (7,9) is furthermore designed to perform a data reconciliation between at least one user appointment BT1 and the treatment program database on the basis of an assignment routine and to determine at least one treatment program B_{BT1} and to output an item of information to a user within a specified time period Δt_{BT1} before the at least one user appointment BT1.

10. System according to claim 9, **characterised in that** the external user terminal (5) is selected from the group consisting of a smart phone (5), a tablet PC and a wearable.

11. Method for operating a household appliance for the treatment of laundry items (2), having a control facility (3) and at least one operating device (7,9) comprising a data unit and an operating means (1,6,10), wherein the at least one operating device (7,9) is configured to exchange data wirelessly with the control facility (3) and wherein a treatment program database is stored in the data unit, wherein the at least one operating device (7,9) is designed to allow an input of at least one user appointment BT1, and wherein the at least one operating device (7,9) is furthermore designed to perform a data reconciliation between at least one user appointment BT1 and the treatment program database on the basis of an assignment routine and to determine at least one treatment program B_{BT1} and to output an item of information to a user within a specified time period Δt_{BT1} before the at least one user appointment BT1, **characterised in that** the method comprises the following steps:
a) inputting at least one user appointment BT1 into the operating device (7,9), wherein the at least one user appointment BT1 comprises an appointment identifier K_{BT1} and a date D_{BT1};
b) the data unit performs a data reconciliation with the treatment program database at least in respect of the appointment identifier K_{BT1} by means of the assignment routine and determines at least one treatment program B_{BT1};
c) the operating device (7,9) outputs an item of information to a user within a time period Δt_{BT1} specified in respect of the date D_{BT1}, according to the at least one treatment program B_{BT1} determined in step b) and the at least one user appointment BT1 input in step a),
and wherein the steps a) to c) are performed once or multiple times.

12. Method according to claim 11, **characterised in that**, in the event that the duration of the at least one treatment program B_{BT1} determined in step b) is longer than the time period Δt_{BT1}, the data unit determines a shortened treatment program B_{BT1, Express} and outputs an item of information to a user in step c).

13. Method according to one of claims 11 or 12, **characterised in that** the method additionally comprises the step:
d) the operating device (7,9) outputs to the user the option of having the item of information output in step c) output again after a time period Δt_{delay} that can be selected by the user has elapsed, wherein Δt_{delay} < Δt_{BT1}.

14. Method according to one of claims 11 to 13, **characterised in that** the at least one operating device is integrated into an external user terminal and in step a) the at least one user appointment BT1 is input by importing from an electronic user appointment calendar.

15. Method according to one of claims 11 to 14, **characterised in that** a keyword database is additionally stored in the data unit, which links at least one appointment identifier K_{BT1} with at least one treatment program, and the data reconciliation in step b) is performed by means of a keyword search.

## Revendications

1. Appareil ménager destiné à l'entretien de pièces de linge (2), doté d'un dispositif de contrôle (3) et au moins d'un dispositif de commande (7, 9) comprenant une unité de données et un moyen de commande (1, 6, 10), l'au moins un dispositif de commande (7, 9) étant configuré pour échanger sans fil des données avec le dispositif de contrôle (3), et une banque de données de programmes de traitement étant mémorisée dans l'unité de données, **caractérisé en ce que** l'au moins un dispositif de commande (7, 9) est conçu pour permettre une entrée au moins d'une date d'utilisateur BT1, et l'au moins un dispositif de commande (7, 9) étant en outre conçu pour réaliser une comparaison de données entre au moins une date d'utilisateur BT1 et la banque de données de programmes de traitement à l'aide d'une routine d'attributions, et pour déterminer au moins un programme de traitement B_{BT1} et pour sortir pendant un laps de temps Δt_{BT1} prédéfini une information à un utilisateur avant l'au moins une date d'utilisateur BT1.

2. Appareil ménager (2) selon la revendication 1, **caractérisé en ce que** le dispositif de commande (7, 9) est en outre conçu, au cas où la durée de l'au moins un programme de traitement B_{BT1} déterminé soit plus longue que le laps de temps Δt_{BT1}, pour déterminer un programme de traitement B_{Bt1, Express} raccourci de manière correspondante et pour sortir une information à l'utilisateur.

3. Appareil ménager (2) selon la revendication 1 ou 2, **caractérisé en ce que** le moyen de commande (1, 6, 10) permet à un utilisateur d'entrer au moins une fois un laps de temps Δt_{delay} < Δt_{BT1} pour une sortie répétée de l'information.

4. Appareil ménager (2) selon l'une quelconque des revendications 1 à 3, **caractérisé en ce que** l'appareil ménager destiné à l'entretien de pièces de linge (2) est un lave-linge (2) ou un lave-linge séchant.

5. Appareil ménager (2) selon l'une quelconque des revendications 1 à 4, **caractérisé en ce que** l'appareil ménager présente en outre au moins un capteur (8) pour la détection de caractéristiques de linge.

6. Appareil ménager (2) selon la revendication 5, **caractérisé en ce que** l'au moins un capteur (8) est un capteur spectroscopique (8).

7. Appareil ménager (2) selon l'une quelconque des revendications 1 à 6, **caractérisé en ce que** l'au moins un dispositif de commande (8) est intégré dans l'appareil ménager (2), **en ce que** le moyen de commande (1, 6, 10) comprend un panneau de commande doté d'un dispositif d'affichage (10) et est réalisé pour l'entrée et la sortie de données en représentation graphique et/ou de texte et/ou de manière acoustique, le dispositif de commande (7, 9) étant en outre configuré pour échanger sans fil des données avec un terminal utilisateur externe (5).

8. Appareil ménager (2) selon l'une quelconque des revendications 1 à 7, **caractérisé en ce que** l'au moins un dispositif de commande (7, 9) est intégré dans un terminal utilisateur externe (5), et **en ce que** le moyen de commande (1, 6, 10) comprend un écran tactile (1, 6) et est réalisé pour l'entrée et la sortie de données en représentation graphique et/ou de texte et/ou de manière acoustique.

9. Système comprenant un terminal utilisateur externe (5) et un appareil ménager (2), l'appareil ménager (2) étant un appareil ménagé destiné à l'entretien de pièces de linge (2), doté d'un dispositif de contrôle (3) et au moins d'un dispositif de commande (7, 9) comprenant une unité de données et un moyen de commande (1, 6, 10), l'au moins un dispositif de commande (7, 9) étant intégré dans le terminal utilisateur externe (5) et étant configuré pour échanger sans fil des données avec le dispositif de contrôle (3), et une banque de données de programmes de traitement étant mémorisée dans l'unité de données, **caractérisé en ce que** l'au moins un dispositif de commande (7, 9) est conçu pour permettre une entrée au moins d'une date d'utilisateur BT1, et l'au moins un dispositif de commande (7, 9) étant en outre conçu pour réaliser une comparaison de données entre au moins une date d'utilisateur BT1 et la banque de données de programmes de traitement à l'aide d'une routine d'attributions, et pour déterminer au moins un programme de traitement B_{BT1} et pour sortir pendant un laps de temps Δt_{BT1} prédéfini une information à un utilisateur avant l'au moins une date d'utilisateur BT1.

10. Système selon la revendication 9, **caractérisé en ce que** le terminal utilisateur externe (5) est sélectionné dans le groupe constitué d'un smartphone (5), d'une tablette PC et d'un Wearable.

11. Procédé de fonctionnement d'un appareil ménager (2) destiné à l'entretien de pièces de linge (2), doté d'un dispositif de contrôle (3) et au moins d'un dispositif de commande (7, 9) comprenant une unité de données et un moyen de commande (1, 6, 10), l'au moins un dispositif de commande (7, 9) étant configuré pour échanger sans fil des données avec le dispositif de contrôle (3), et une banque de données de programmes de traitement étant mémorisée dans l'unité de données, l'au moins un dispositif de commande (7, 9) étant conçu pour permettre une entrée au moins d'une date d'utilisateur BT1, et l'au moins un dispositif de commande (7, 9) étant en outre conçu pour réaliser une comparaison de données entre au moins une date d'utilisateur BT1 et la banque de données de programmes de traitement à l'aide d'une routine d'attributions, et pour déterminer au moins un programme de traitement B_{BT1} et pour sortir pendant un laps de temps Δt_{BT1} prédéfini une information à un utilisateur avant l'au moins une date d'utilisateur BT1, **caractérisé en ce qu'**il comprend les étapes suivantes :
a) entrée au moins d'une date d'utilisateur BT1 dans le dispositif de commande (7, 9), l'au moins une date d'utilisateur BT1 comprenant une caractérisation de date K_{BT1} et une date D_{BT1} ;
b) l'unité de données réalise une comparaison de données avec la banque de données de programmes de traitement au moyen de la routine d'attributions au moins en ce qui concerne la caractérisation de date K_{BT1}, et détermine au moins un programme de traitement B_{BT1} ;
c) le dispositif de commande (7, 9) sort une information à un utilisateur conformément à l'au moins un programme de traitement B_{BT1} déterminé à l'étape (b) et à l'au moins une date d'utilisateur BT1 entrée à l'étape a) pendant un laps de temps Δt_{BT1} prédéfini en ce qui concerne la date D_{BT1},
et les étapes a) à c) étant réalisées une fois ou plusieurs fois.

12. Procédé selon la revendication 11, **caractérisé en ce que**, au cas où la durée de l'au moins un programme de traitement B_{BT1} déterminé à l'étape b) soit plus longue que le laps de temps Δt_{BT1}, l'unité de données détermine un programme de traitement B_{BT1, Express} raccourci et, à l'étape c), sort une information à un utilisateur.

13. Procédé selon la revendication 11 ou 12, **caractérisé en ce que** le procédé comprend en outre l'étape :
d) le dispositif de commande (7, 9) sort à l'utilisateur la possibilité que l'information sortie à l'étape c) soit sortie encore une fois après l'expiration d'un laps de temps Δt_{delay} sélectionnable par l'utilisateur, sachant que Δt_{delay} < Δt_{BT1}.

14. Procédé selon l'une quelconque des revendications 11 à 13, **caractérisé en ce que** l'au moins un dispositif de commande est intégré dans un terminal utilisateur externe, et **en ce qu'**à l'étape a), l'entrée de l'au moins une date d'utilisateur BT1 est réalisée par importation à partir d'un calendrier électronique de dates d'utilisateur.

15. Procédé selon l'une quelconque des revendications 11 à 14, **caractérisé en ce que** dans l'unité de données est en outre intégrée une banque de données de mots-clés, laquelle relie au moins une caractérisation de date K_{BT1} à au moins un programme de traitement, et **en ce que** la comparaison de données est réalisée à l'étape b) par une recherche de mots-clés.
